# EUROPÄISCHE PATENTSCHRIFT

(11) **EP 0 981 892 B1**
(45) Veröffentlichungstag und Bekanntmachung des Hinweises auf die Patenterteilung: **23.03.2005**
(21) Anmeldenummer: 98931976.9
(22) Anmeldetag: 22.04.1998
(51) Int. Cl.: H04M 3/50

(54) **VERFAHREN FÜR EINE AUSGABE-BEHANDLUNG VON IN POSTFÄCHERN EINES NACHRICHTENSPEICHERSYSTEMS (SSS) EINER TELEKOMMUNIKATIONSANLAGE GESPEICHERTEN NACHRICHTEN**
METHOD FOR OUTPUT HANDLING OF MESSAGES STORED IN THE MAILBOXES OF A MESSAGE STORAGE SYSTEM (SSS) OF A TELECOMMUNICATION FACILITY
PROCEDE POUR LE TRAITEMENT DE SORTIE DE MESSAGES MIS EN MEMOIRE DANS DES BOITES POSTALES D'UN SYSTEME DE MEMORISATION DE MESSAGES (SSS) D'UNE INSTALLATION DE TELECOMMUNICATIONS

(30) Priorität: 16.05.1997 DE 19720597
(43) Veröffentlichungstag der Anmeldung: 01.03.2000
(73) Patentinhaber: SIEMENS AKTIENGESELLSCHAFT, 80333 München (DE)
(72) Erfinder: LARISCH, Erhard, D-81476 München (DE)
(86) Internationale Anmeldenummer: PCT/DE1998/001126
(87) Internationale Veröffentlichungsnummer: WO 1998/053592

(56) Entgegenhaltungen:
- EP-A- 0 685 957
- GB-A- 2 290 920

## Beschreibung

Aus der "Produktschrift" HICOM 300 'Voice Mail Service VMS' ": Siemens AG, 1995, Bestell-Nr.: A31002-S10-A1-7-5," ist ein Sprachspeichersystem 'Voice Mail Service VMS' bekannt, welches in ein privates ISDN-Vermittlungssystem integriert ist. Dieses Sprachspeichersystem dient zum Speichern, Abrufen und Verteilen von Nachrichten in natürlicher Sprache. Den im Sprachspeichersystem eingetragenen Benutzern ist hierfür ein persönliches Postfach ("Sprachbriefkasten") zugeteilt. Postfachinhaber können bei ihrer Abwesenheit die für sie bestimmten Anrufe zu Ihrem Postfach umleiten, in dem die mit den Anrufen übermittelten Nachrichten gespeichert werden.

Durch Anwählen seines Postfaches kann der eingetragene Benutzer jederzeit und ortsunabhängig die gespeicherten Nachrichten abhören. Eine akustische Bedienerführung erleichtert den Umgang mit dem Sprachspeichersystem. Die Bedienung des Sprachspeichersystems erfolgt z.B. mit Hilfe von über den Tastwahlblock eines Endgeräts aktivierbaren Frequenztönen nach dem Mehrfrequenzwahlverfahren (MFV).

Nach dem Anhören einer gespeicherten Nachricht, kann die Nachricht gelöscht, gespeichert oder bearbeitet werden. So kann z.B. eine Frage eines Teilnehmers, der eine Sprach-Nachricht hinterlegt hat, direkt in dessen Postfach beantwortet werden. Nach Abhören einer Nachricht kann auch direkt eine Telefonverbindung zu diesem Teilnehmer hergestellt werden, ohne dessen Rufnummer eingeben zu müssen (Rückfrage):

Aus GB-A-2 290 920 ist beispielsweise ein Sprachspeichersystem einer Telekommunikationsanlage bekannt, bei der über eine Konferenzschaltung ein Verbindungsaufbau zwischen einem Endgerät eines Postfachinhabers, einem Endgerät eines rufenden Teilnehmers und dem Postfach des Postfachinhabers ermöglicht wird. Der Postfachinhaber kann hierbei, ohne das Wissen des rufenden Teilnehmers, während der Aufzeichnung einer vom rufenden Teilnehmers übermittelten Nachricht in das Postfach, mithören. Auf Veranlassung des Postfachinhabers kann die Aufzeichnung gestoppt werden, die Verbindung zwischen dem Endgerät des rufenden Teilnehmer und dem Postfach abgebaut werden und eine direkte Verbindung zwischen dem Endgerät des Postfachinhabers und dem Endgerät des rufenden Teilnehmers aufgebaut werden.

Des weiteren ist aus EP-A-0 685 957 ein Verfahren zum Abspeichern von Sprachnachrichten in einer Telekommunikationsanlage bekannt. Hierbei wird in Fällen, in denen bei einem Anruf eines rufenden Teilnehmers kein Verbindungsweg zu einem Sprachspeichersystem verfügbar ist und der rufende Teilnehmer einen Rückruf aktiviert, die Rufnummern des Sprachspeichersystems und des gerufenen Teilnehmers in der Telekommunikationsanlage gespeichert. Infolge eines Freiwerdens eines Verbindungsweges wird die Rufnummer des gerufenen Teilnehmers an das Sprachspeichersystem weitergeleitet, das daraufhin den rufenden Teilnehmer mit dem Postfach des gerufenen Teilnehmers verbindet.

Durch eine vermehrte Nutzung von Sprachspeichersystemen ('Voice Mail') nimmt die Anzahl von kurzfristig (z.B. während einer Besprechung) oder mittelfristig (z.B. während einer mehrtägigen Abwesenheit) zu speichernden Nachrichten zu. Es ist daher für den Postfachinhaber von Interesse die Gesamtheit der gespeicherten Sprach-Nachrichten so zügig und einfach wie möglich abzuarbeiten.

Bei einer erfolglosen Rückfrage, d.h. bei Nichtzustandekommen einer Verbindung zwischen dem Postfachinhaber und einem Teilnehmer, der eine Sprach-Nachricht hinterlegt hat, erlauben es viele Sprachspeichersysteme eine Sprach-Nachricht zu hinterlegen und/oder anschließend unterbrechungsfrei mit der Bearbeitung einer nächsten bzw. anderen Sprach-Nachricht im Sinne einer logischen 'Voice Mail User Session' fortzufahren. Ist dagegen ein Verbindungsversuch zu einem Teilnehmer, der eine Sprach-Nachricht hinterlegt hat erfolgreich, d.h. es ist zu einer gewünschten Zweierverbindung zwischen dem Postfachinhaber und dem Teilnehmer, ohne weitere Beteiligung des Sprachspeichersystems gekommen, so ist mit dem Beenden dieser Zweierverbindung stets auch die Verbindung zum Sprachspeichersystem beendet.

Nach einer erfolgreichen Verbindung zwischen dem Postfachinhaber und dem Teilnehmer, der eine Sprach-Nachricht hinterlegt hat, muß der Postfachinhaber zur Fortsetzung seiner Nachrichtenabarbeitung erneut eine Verbindung zum Sprachspeichersystem aufbauen, um seine 'Voice Mail User Session' mit der nächsten, bzw. einer anderen gespeicherten Nachricht, oder auch mit dem Löschen der soeben erfolgreich bearbeiteten Nachricht fortzusetzen. Das bedeutet, daß im Zuge des erneuten Verbindungsaufbaus auch wieder eine Eingabe aller notwendigen Identifikationsdaten und falls erforderlich von Paßwörtern vorgenommen werden muß.

Der Erfindung liegt die Aufgabe zugrunde, ein Verfahren anzugeben, welches einen höheren Komfort bei einer 'Voice Mail User Session' vermittelt.

Gelöst wird die Aufgabe ausgehend von den Merkmalen des Oberbegriffs des Patentanspruchs 1 durch dessen kennzeichnende Merkmale.

Ein wesentlicher Vorteil des erfindungsgemäßen Verfahrens ist, daß nach Beendigung einer erfolgreichen Rückfrageverbindung durch den Teilnehmer zur Fortsetzung der 'Voice Mail User Session' kein erneuter Wahlvorgang, sowie keine wiederholte Identifizierung des Postfachinhabers anhand der notwendigen Sicherheitscodes (Codenummer, Paßwort) vorgenommen werden müssen.

Vorteilhafte Weiterbildungen der Erfindung sind in den Unteransprüchen angegeben.

Eine Zeitüberwachung kann dazu dienen, die Dauer einer 'Voice Mail User Session' zu begrenzen, wodurch ein Blockieren des gesamten Sprachspeichersystems durch eine geringe Zahl von Postfachinhabern vermieden wird.

Durch ein Übermitteln von Aufrechterhaltungs-Meldungen ('Voice_Mail-User_Session_Alife') von der Telekommunikationsanlage an das Sprachspeichersystem kann einem drohenden Ablauf der Zeitüberwachungseinrichtung in speziellen Fällen entgegen gewirkt werden, so daß auch nach längeren Gesprächen eine 'Voice Mail User Session' ohne Unterbrechung fortsetzbar ist.

Ein Ausführungsbeispiel der Erfindung wird im folgenden anhand der Zeichnung näher erläutert.

Dabei zeigen:
- Fig 1:: ein Strukturbild zur schematischen Darstellung der im Rahmen einer Durchführung einer 'Voice Mail User Session' beteiligten Funktionseinheiten
- Fig 2:: ein Ablaufdiagramm gemäß einer Weiterbildung des erfindungsgemäßen Verfahrens

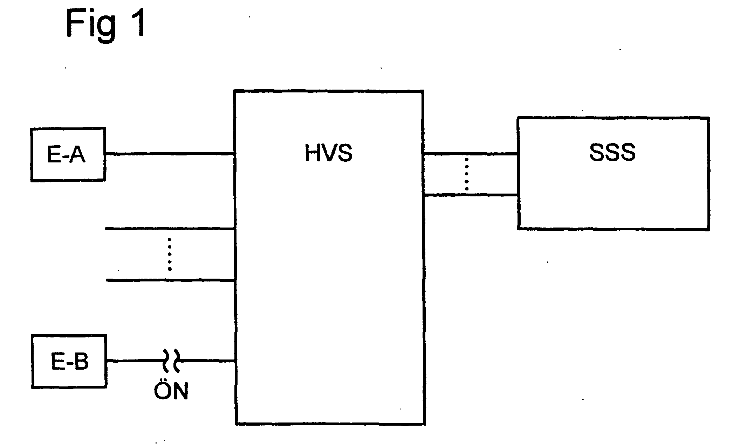

In Fig 1 ist in schematischer Weise ein Vermittlungssystem HVS mit einem Endgerät E-A, welches einem Postfachinhaber zugeordnet ist, dargestellt. Weiter ist ein Sprachspeichersystem SSS und ein Endgerät E-B eines Teilnehmers, welcher eine Sprach-Nachricht im Postfach hinterlegt hat, dargestellt. Die Endgeräte E-A des Postfachinhabers und E-B des Teilnehmers müssen nicht direkt an das Vermittlungssystem HVS angeschlossen sein, sondern können auch über ein öffentliches Netz ÖN mit dem Vermittlungssystem HVS verbunden sein.

Das Sprachspeichersystem SSS ist beispielsweise über eine ISDN-Verbindung oder über eine analoge Verbindung an das Vermittlungssystem HVS angeschlossen.

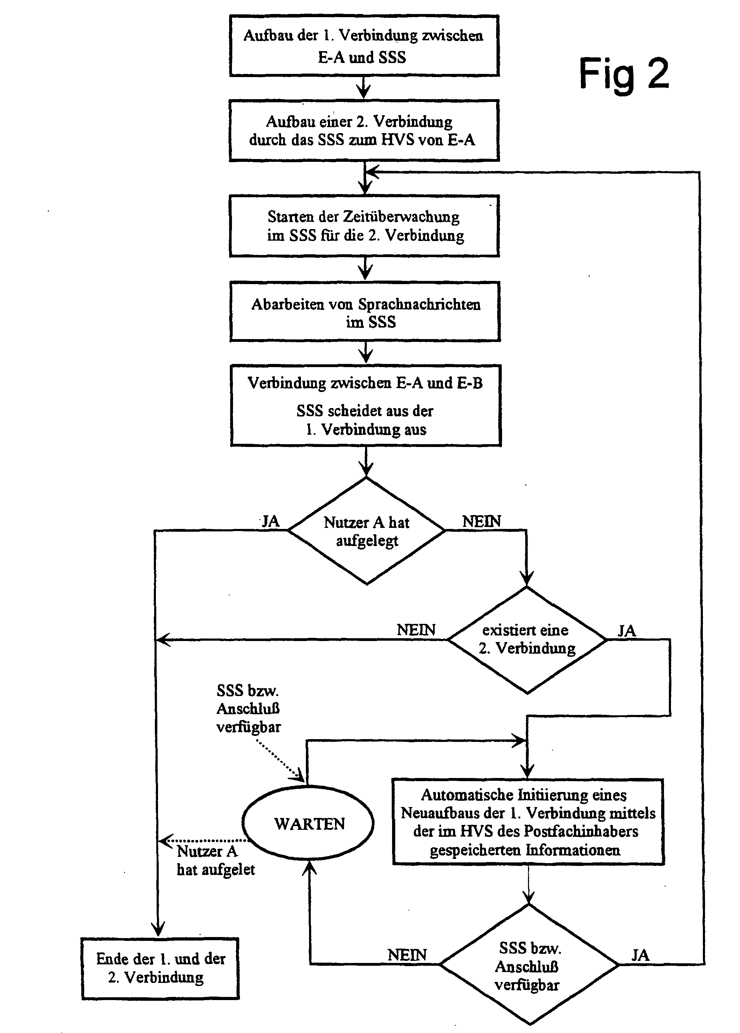

In Fig 2 ist ein Ablaufdiagramm mit den wesentlichen Schritten zur Abarbeitung der im Sprachspeichersystem gespeicherten Nachrichen dargestellt. Bei der Abarbeitung wird zunächst eine erste Verbindung zwischen dem Endgerät E-A des Postfachinhabers und dem Sprachspeichersystem SSS aufgebaut. Zusätzlich zu dieser ersten Verbindung wird anschließend eine logische zweite Verbindung (z.B. Signalisierung über den D-Kanal einer ISDN-Verbindung) aufgebaut, welche in der Regel länger bestehen bleibt, als die erste Verbindung. Die Initiative zum Aufbau einer logischen zweiten Verbindung erfolgt durch das Sprachspeichersystem SSS aufgrund definierter Benutzeraktionen, wie z.B. einer Anwahl eines bestimmten Ports (Verbindungskanal zwischen dem Sprachspeichersystem SSS und dem Vermittlungssystem HVS) des Sprachspeichersystems SSS.

Im Rahmen des Aufbaus der zweiten Verbindung übermittelt das Sprachspeichersystem SSS eine Vermittlungsnachricht zu demjenigen Vermittlungssystem, an welches das Endgerät E-A des Postfachinhabers angeschlossen ist; das Vermittlungssystem wird im weiteren als Heimatvermittlungssystem HVS des Postfachinhabers bezeichnet. Die Vermittlungsnachricht, die auch als Voice_Mail_User_Session_Start Meldung bezeichnet wird, beinhaltet zur eindeutigen Kennzeichnung der Bearbeitungssequenz ('Voice Mail User Session'), d.h. des Bearbeitungsvorgangs der im Sprachspeichersystem SSS gespeicherten Sprach-Nachrichten, die aktuelle Rufnummer des Endgeräts E-A des Postfachinhabers, sowie die Rufnummer des Sprachspeichersystems SSS. Zusätzlich wird im Sprachspeichersystem SSS eine 'session-spezifische' Zeitüberwachung zur Überwachung der logischen zweiten Verbindung (Zeitdauer z.B. 30-60 Minuten) gestartet. Das Heimatvermittlungssystem HVS des Postfachinhabers speichert die in der Vermittlungsnachricht enthaltene Information zusammen mit dem Kennzeichen "Voice Mail User Session" und übermittelt daraufhin eine Voice_Mail_User_ Session_Start_Ack-Meldung zurück zum Sprachspeichersystem SSS.

Der Postfachinhaber kann daraufhin mit der Abarbeitung, d.h. mit dem Ausgabevorgang der im Sprachspeichersystem SSS gespeicherten Sprach-Nachrichten beginnen. Im Zuge des Ausgabevorgangs kann ein Verbindungsaufbau vom Endgerät E-A des Postfachinhabers zum Endgerät E-B des Teilnehmers in Auftrag gegeben werden (Rückfrage). Kommt es aufgrund eines solchen Auftrags zu einer erfolgreichen Verbindung zwischen dem Endgerät E-A des Postfachinhabers und dem Endgerät E-B des Teilnehmers (vermittlungstechnische Rückfrage mit automatischem Umkoppeln), so wird in einem ersten Schritt zusätzlich zu der Verbindung zwischen dem Endgerät E-A des Postfachinhabers und dem Sprachspeichersystem SSS eine Verbindung zwischen dem Sprachspeichersystem SSS und dem Endgerät E-B des Teilnehmers aufgebaut. In einem zweiten Schritt werden die beiden bestehenden Verbindungen zusammengeschaltet, so daß es zu einer Verbindung zwischen dem Endgerät E-A des Postfachinhabers und dem Endgerät E-B des Teilnehmers kommt, wobei das Sprachspeichersystem SSS vollständig von dieser Verbindung abgetrennt wird.

Wird die Verbindung zwischen dem Endgerät E-A des Postfachinhabers und dem Endgerät E-B des Teilnehmers durch die Initiative des Postfachinhabers z.B. durch Auflegen des Hörers beendet, so wird die 'Voice Mail User Session' und damit die erste und die zweite Verbindung beendet. Wird die Verbindung zwischen den Endgeräten E-A und E-B durch den Teilnehmer beendet, ohne daß der Postfachinhaber auflegt und existiert die zweite Verbindung zwischen dem Heimatvermittlungssystem des Endgerätes E-A und dem Sprachspeichersystem SSS, so versucht das Heimatvermittlungssystem HVS des Postfachinhabers anhand der im Heimatvermittlungssystem HVS gespeicherten Information erneut eine erste Verbindung zwischen dem Endgerät E-A und dem Sprachspeichersystem SSS aufzubauen. Für den Fall, daß die zweite Verbindung nicht mehr existiert, weil z.B. nach Ablauf einer bestimmten Zeitdauer die zweite Verbindung durch die 'session-spezifische' Zeitüberwachung getrennt wurde, wird die 'Voice Mail User Session' beendet.

Ist zum Zeitpunkt des Versuchs die erste Verbindung erneut aufzubauen ein freier Anschluß zum Sprachspeichersystem SSS bzw. das Sprachspeichersystem SSS nicht verfügbar, so wird der Postfachinhaber durch einen Hinweis z.B. eine Sprachnachricht des Systems davon unterrichtet. Er kann daraufhin bis zum Freiwerden einer Anschlußleitung warten oder selbst die noch bestehende Verbindung und damit die 'Voice Mail User Session' beenden. Ist zum Zeitpunkt des Versuchs die erste Verbindung erneut aufzubauen ein freier Anschluß zum Sprachspeichersystem und das Sprachspeichersystem SSS verfügbar, so wird erneut eine erste Verbindung zwischen dem Endgerät E-A des Postfachinhabers und dem Sprachspeichersystem SSS aufgebaut. Der Postfachinhaber kann dann seine 'Voice Mail User Session' an der Stelle weiterführen, an der sie auf seine Veranlassung hin, durch den Aufbau der Verbindung mit dem Endgerät E-B des Teilnehmers unterbrochen wurde. Der Postfachinhaber kann also unterbrechungs- und aktionsfrei fortfahren, d.h. er muß keine erneute Identifizierung anhand der notwendigen Sicherheitscodes (Codenummer, Paßwort) vornehmen.

Für den Fall, daß der Postfachinhaber nach dem ersten Verbindungsaufbau zu seinem Sprachspeichersystem SSS die Verbindung z.B. durch Auflegen des Hörers selbst beendet hat, erfolgt die Beendigung der 'Voice Mail User Session' durch die Initiative des Heimatvermittlungssystems HVS des Postfachinhabers. In dieser Situation sendet das Heimatvermittlungssystem HVS des Postfachinhabers eine Voice_Mail_User_ Session_End-Meldung mit der Adresse des Endgeräts E-A an die Adresse des Sprachspeichersystems SSS, welches zuvor die Voice_Mail_User_Session_Start-Meldung an das Heimatvermittlungssystem HVS des Postfachinhabers gesendet hat. Das Heimatvermittlungssystem HVS löscht außerdem alle internen Informationen über die zuvor bestandene 'Voice Mail User Session' (z.B. die Adresse des Endgeräts E-A des Postfachinhabers und die Adresse des Sprachspeichersystems SSS). Das Sprachspeichersystem SSS beendet mit Empfang dieser Voice_ Mail_User_Session_End-Meldung ebenfalls die bestehende zweite Verbindung und löscht die 'session-spezifische' Zeitüberwachung. Optional kann vom Sprachspeichersystem SSS auch eine Voice_Mail_User_Session_End_Ack-Meldung an das Heimatvermittlungssystem HVS des Postfachinhabers übermittelt werden.

Bei Ablauf der 'session-spezifischen' Zeitüberwachung im Sprachspeichersystem SSS vor einem Empfang einer Voice_Mail_ User_Session_End-Meldung wird im Sprachspeichersystem SSS die logische zweite Verbindung beendet. Dies wird dem Heimatvermittlungssystem HVS des Postfachinhabers durch eine vom Sprachspeichersystem SSS übermittelte Voice_Mail_User_Session_End-Meldung angezeigt. Nach einem Beenden der Verbindung zwischen den Endgeräten E-A und E-B durch den Teilnehmer ist auch die 'Voice Mail User Session' beendet und der Postfachinhaber muß zum weiteren Bearbeiten seiner Nachrichten eine neue Verbindung zum Sprachspeichersystem SSS aufbauen, was eine Eingabe aller notwendigen Identifikationsdaten erfordert.

Um das Zeitintervall der 'session-spezifischen' Zeitüberwachung im Sprachspeichersystem SSS nicht extrem hoch setzen zu müssen, aber dennoch länger dauernde Gespräche von Nutzern des Sprachspeichersystems SSS zuzulassen, können von dem Heimatvermittlungssystem HVS des Postfachinhabers an das Sprachspeichersystem SSS in bestimmten Abständen (Zeitintervall z.B. 10 Minuten) Aufrechterhaltungs-Meldungen ('Voice_Mail_ User_Session_Alive') gesendet werden, welche dazu führen, daß die 'session-spezifische' Zeitüberwachung im Sprachspeichersystem SSS neu gestartet wird, und somit auch nach längeren Gesprächen eine unterbrechungsfreie Abarbeitung von weiteren Nachrichten möglich ist.

Die Übertragung der Meldungen zwischen dem Sprachspeichersystem SSS und dem Heimatvermittlungssystem HVS erfolgt im Rahmen einer ISDN Temporary Signalling Connection, d.h. ohne Nutzung eines Datenkanals (B-Kanal). Hierbei wird eine Vermittlungsnachricht z.B. Voice_Mail_User_Session_Start mit zwei Parametern übermittelt. Die Parameter beinhalten die Adresse des Endgeräts E-A des Postfachinhabers und die Adresse des Sprachspeichersystems SSS. Eine Quittierung der erhaltenen Nachrichten kann optional vorgesehen sein.

Bei einer Verwendung von nichtdigitalen Anschaltungen des Sprachspeichersystems SSS an das Vermittlungssystem HVS bzw. bei analogen Netzen erfolgt eine Übermittlung von Meldungen zwischen dem Sprachspeichersystem SSS und dem Vermittlungssystem HVS durch Sequenzen von MFV-Tönen, wobei für die Ziffern 0 bis 9 und für die Zeichen '*' und '#' vordefinierte Frequenzen verwendet werden.

## Patentansprüche

1. Verfahren für eine Ausgabe-Behandlung von in Postfächern eines Nachrichtenspeichersystems (SSS) einer Telekommunikationsanlage gespeicherten Nachrichten, bei dem eine erste Verbindung zwischen einem Endgerät (E-A) eines Postfachinhabers und dem Nachrichtenspeichersystem (SSS) eingerichtet wird, und bei einer von einem Teilnehmer für den Postfachinhaber hinterlegten Nachricht von dem Postfachinhaber ein Verbindungsaufbau zu einem Endgerät (E-B) des Teilnehmers veranlassbar ist, wobei bei einem erfolgreichen Verbindungsaufbau mit dem Endgerät (E-B) des Teilnehmers die erste Verbindung durch eine Verbindung zwischen dem Endgerät (E-A) des Postfachinhabers und dem Endgerät (E-B) des Teilnehmers ersetzt wird,
**dadurch gekennzeichnet,**
**daß** vor dem Ersetzen der ersten Verbindung eine zweite Verbindung zwischen der dem Endgerät (E-A) des Postfachinhabers zugeordeten Telekommunikationsanlage (HVS) und dem Nachrichtenspeichersystem (SSS) aufgebaut wird, wobei in der Telekommunikationsanlage (HVS) die Rufnummer des Endgerätes (E-A) des Postfachinhabers und die des Nachrichtenspeichersystems (SSS) gespeichert werden, und daß bei einer durch den Teilnehmer veranlaßten Beendigung der Verbindung zwischen dem Endgerät (E-A) des Postfachinhabers und dem Endgerät (E-B) des Teilnehmers, anhand der in der Telekommunikationsanlage (HVS) gespeicherten Rufnummern erneut eine erste Verbindung zwischen dem Endgerät (E-A) des Postfachinhabers und dem Nachrichtenspeichersystem (SSS) aufgebaut wird.

2. Verfahren nach Anspruch 1,
**dadurch gekennzeichnet,**
**daß** bei dem Aufbau der zweiten Verbindung eine Zeitüberwachungseinrichtung gestartet wird, und daß bei Ablauf einer vorgegebenen Zeitdauer die zweite Verbindung freigegeben wird.

3. Verfahren nach Anspruch 2,
**dadurch gekennzeichnet,**
**daß** von dem Nachrichtenspeichersystem (SSS) nach Empfang einer von der Telekommunikationsanlage (HVS) übermittelten Aufrechterhaltungs-Meldung ('Voice_Mail_User_Session_Alife') die Zeitüberwachungseinrichtung neu gestartet wird.

4. Verfahren nach einem der vorangegangenen Ansprüche,
**dadurch gekennzeichnet,**
**daß** bei dem erneuten Aufbau einer ersten Verbindung zwischen dem Endgerät (E-A) des Postfachinhabers und dem Nachrichtenspeichersystem (SSS) eine Bearbeitung der im Nachrichtenspeichersystem (SSS) gespeicherten Nachrichten an der Stelle fortgesetzt wird, an der die vorhergehende erste Verbindung ersetzt wurde.

5. Verfahren nach einem der vorangegangenen Ansprüche,
**dadurch gekennzeichnet,**
**daß** für den Fall, daß im Zuge des erneuten Aufbaus einer ersten Verbindung zwischen dem Endgerät (E-A) des Postfachinhabers und dem Nachrichtenspeichersystem (SSS) kein freier Anschluß des Nachrichtenspeichersystems (SSS) erkannt wird, dies dem Postfachinhaber gemeldet wird.

6. Verfahren nach einem der vorangegangenen Ansprüche,
**dadurch gekennzeichnet,**
**daß** in dem Nachrichtenspeichersystem (SSS) Sprach-Nachrichten und/oder Fax-Nachrichten und/oder Nachrichten für elektronische Post und/oder audiovisuelle Nachrichten speicherbar sind.

7. Verfahren nach einem der vorangegangenen Ansprüche, ,
**dadurch gekennzeichnet,**
**daß** die erste und/oder die sie ersetzende Verbindung eine audiovisuelle Verbindung ist.

## Claims

1. Method for output handling of messages stored in mailboxes of a message storage system (SSS) of a telecommunications system, wherein a first connection is set up between a terminal device (E-A) of a mailbox owner and the message storage system (SSS), and if a message has been left for the mailbox owner by a subscriber a connection setup to a terminal device (E-B) of the subscriber can be initiated by the mailbox owner, whereby if the connection is set up successfully to the terminal device (E-B) of the subscriber the first connection is replaced by a connection between the terminal device (E-A) of the mailbox owner and the terminal device (E-B) of the subscriber,
**characterised in that**
before the first connection is replaced a second connection is set up between the telecommunications system (HVS) assigned to the terminal device (E-A) of the mailbox owner and the message storage system (SSS), with the telephone number of the terminal device (E-A) of the mailbox owner and the telephone number of the message storage system (SSS) being stored in the telecommunications system, and that if the termination of the connection between the terminal device (E-A) of the mailbox owner and the terminal device (E-B) of the subscriber is initiated by the subscriber, a new first connection is set up between the terminal device (E-A) of the mailbox owner and the message storage system (SSS) using the telephone numbers stored in the telecommunications system (HVS).

2. Method according to claim 1,
**characterised in that**
when the second connection is set up a time monitoring facility is started and that when a predetermined period of time elapses, the second connection is released.

3. Method according to claim 2,
**characterised in that**
after a session maintenance message ("Voice_Mail_User_Session_Alive") transmitted by the telecommunications system (HVS) has been received the time monitoring facility is restarted by the message storage system (SSS).

4. Method according to one of the preceding claims,
**characterised in that**
when a new first connection is set up between the terminal device (E-A) of the mailbox owner and the message storage system (SSS) processing of the messages stored in the message storage system (SSS) is resumed at the point at which the previous first connection was replaced.

5. Method according to one of the preceding claims,
**characterised in that**
in the event that no free connection to the message storage system (SSS) is detected in the course of setting up a new first connection between the terminal device (E-A) of the mailbox owner and the message storage system (SSS), this situation is reported to the mailbox owner.

6. Method according to one of the preceding claims,
**characterised in that**
voice messages and/or fax messages and/or electronic mail messages and/or audiovisual messages can be stored in the message storage system (SSS).

7. Method according to one of the preceding claims,
**characterised in that**
the first connection and/or the connection replacing it is an audiovisual connection.

## Revendications

1. Procédé pour un traitement de sortie de messages mis en mémoire dans des boîtes postales d'un système de mémorisation de messages (SSS) d'une installation de télécommunications, dans lequel une première connexion est établie entre un terminal (E-A) d'un titulaire de boîte postale et le système de mémorisation de messages (SSS) et, en cas de message déposé par un abonné pour le titulaire de boîte postale, le titulaire de boîte postale peut provoquer un établissement de connexion à un terminal (E-B) de l'abonné, la première connexion, en cas d'établissement de connexion réussi avec le terminal (E-B) de l'abonné, étant remplacée par une connexion entre le terminal (E-A) du titulaire de boîte postale et le terminal (E-B) de l'abonné,
**caractérisé en ce que**,
avant le remplacement de la première connexion, une deuxième connexion est établie entre l'installation de télécommunications (HVS) affectée au terminal (E-A) du titulaire de boîte postale et le système de mémorisation de messages (SSS), le numéro d'appel du terminal (E-A) du titulaire de boîte postale et celui du système de mémorisation de messages (SSS) étant mis en mémoire dans l'installation de télécommunications (HVS) et **en ce que**, en cas de terminaison de la connexion entre le terminal (E-A) du titulaire de boîte postale et le terminal (E-B) de l'abonné, provoquée par l'abonné, une première connexion entre le terminal (E-A) du titulaire de boîte postale et le système de mémorisation de messages (SSS) est de nouveau établie à l'aide des numéros d'appel mis en mémoire dans l'installation de télécommunications (HVS).

2. Procédé selon la revendication 1,
**caractérisé en ce**
**qu'**un dispositif de surveillance du temps est lancé lors de l'établissement de la deuxième connexion et en ce que la deuxième connexion est libérée à l'expiration d'une durée de temps donnée.

3. Procédé selon la revendication 2,
**caractérisé en ce que**
le dispositif de surveillance du temps est relancé par le système de mémorisation de messages (SSS) après la réception d'un message de maintien («Voice_Mail_User_Session_Alive») transmis par l'installation de télécommunications (HVS).

4. Procédé selon l'une des revendications précédentes,
**caractérisé en ce que**,
lors du nouvel établissement d'une première connexion entre le terminal (E-A) du titulaire de boîte postale et le système de mémorisation de messages (SSS), un traitement des messages mis en mémoire dans le système de mémorisation de messages (SSS) se poursuit à l'endroit où la première connexion précédente a été remplacée.

5. Procédé selon l'une des revendications précédentes,
**caractérisé en ce que**,
dans le cas où, dans la foulée du nouvel établissement d'une première connexion entre le terminal (E-A) du titulaire de boite postale et le système de mémorisation de messages (SSS), aucun raccord libre du système de mémorisation de messages (SSS) n'est reconnu, ceci est signalé au titulaire de boîte postale.

6. Procédé selon l'une des revendications précédentes,
**caractérisé en ce que**
peuvent être mis en mémoire, dans le système de mémorisation de messages (SSS), des messages vocaux et/ou des messages télécopiés et/ou des messages pour courrier électronique et/ou des messages audiovisuels.

7. Procédé selon l'une des revendications précédentes,
**caractérisé en ce que**
la première connexion et/ou la connexion qui la remplace sont des connexions audiovisuelles.
